Europäisches Patentamt

European Patent Office

Office européen des brevets

(11) Publication number: **0 184 269**
**B1**

(12) **EUROPEAN PATENT SPECIFICATION**

(45) Date of publication of patent specification: **08.08.90**

(51) Int. Cl.⁵: **G 01 N 21/49**

(21) Application number: **85202023.9**

(22) Date of filing: **04.12.85**

(54) **Fiber optic probe and method for determining the size and/or concentration of materials in suspension.**

(30) Priority: **04.12.84 US 678115**
**18.07.85 US 756359**

(43) Date of publication of application:
**11.06.86 Bulletin 86/24**

(45) Publication of the grant of the patent:
**08.08.90 Bulletin 90/32**

(84) Designated Contracting States:
**DE FR GB NL**

(56) References cited:
**EP-A-0 017 007**
**EP-A-0 098 095**
**US-A-3 986 778**
**US-A-4 322 164**
**US-A-4 497 577**

**PATENT ABSTRACTS OF JAPAN, vol. 6, no. 145**
**(P-132)1023r, 4th August 1982; & JP - A - 57**
**66342**

**PATENT ABSTRACTS OF JAPAN, vol. 7, no. 38**
**(P-176)1183r, 16th February 1983; & JP - A - 57**
**190 254**

(73) Proprietor: **THE DOW CHEMICAL COMPANY**
**2030 Dow Center Abbott Road P.O. Box 1967**
**Midland Michigan 48640-1967 (US)**

(72) Inventor: **McLachlan, Richard D.**
**2412 Damman**
**Midland Michigan 48640 (US)**
Inventor: **Rothman, Leslie D.**
**1215 Adams Drive**
**Midland Michigan 48640 (US)**
Inventor: **Chrisman, Ray W.**
**5501, Swede Road**
**Midland Michigan 48640 (US)**
Inventor: **Haese, Nathan N.**
**315, Frederal Street**
**Midland Michigan 48640 (US)**
Inventor: **Meadows, Michael D.**
**202 Pine Street**
**Lake Jackson Texas 77566 (US)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

# EP 0 184 269 B1

**Description**

This invention relates to a fiber optic probe that is particularly useful for in-situ detection and measurement of the intensity of light scattered by particles suspended in a transparent or translucent fluid medium. This invention also relates to the in-situ measurement of the size and/or concentration of solid particles, immiscible liquid droplets, or gas bubbles in suspension in the fluid medium.

In the practice of many chemical processes proper control of the process requires detection of the presence of a suspended phase in the reaction medium and determination of its concentration, particle size, or both. An example of such a process is one in which crystals are to be formed in a reaction liquid. Detection of the onset of crystallization usually is necessary to control the process in such manner as to yield crystals of the desired size and purity. Detection of the onset of crystallization currently is accomplished by visual monitoring of the reaction medium, detection of the exotherm resulting from the heat of crystallization, or detection of an increase of the turbidity of the reaction medium as a result of the presence therein of crystals. These known methods often lack sufficient sensitivity and dynamic range for proper process control.

Numerous other methods exist for measuring the size and concentration of solid particles in suspension, but nearly all require removal of a sample of the suspension for examination and thus are not generally applicable to the measurement of liquid droplets or gas bubbles. These known methods also are unsuitable for the measurement of solid particles in those instances in which the size and/or concentration undergoes changes unless the cause of the changes can be terminated abruptly on removal of the sample from the suspension.

In EP—A—0017007 a device is disclosed comprising a light source and a measuring device, wherein the device is provided with optical fibers for illumination with light and for measuring reflected light.

In Patents abstracts of Japan, Vol. 6, 04.08.1982, no. 145 (P—132) (1023) an optical system is described, for illuminating a medium with a monocolor light source and measuring the scattered light at an angle of 90°.

US—A—4,322,164 describes an optical scattering reference medium which is formed of a plurality of scattering particles substantially uniformly dispersed in a substantially compliant, non-compressable transparent solid medium which is selectively positionable against the distal end of an optical catheter for use therewith within a sterilizable disposable package for performing repeatable photometric measurements to standardize the performance of the photometric measuring instruments.

In Patents abstracts of Japan, Vol. 7, no. 38, (P-176) (1183), 16-2-'83 an optical probe is described consisting of a light source optical fiber and two collecting fibers placed parallel to each other.

A fiber optic probe constructed in accordance with the invention makes use of the phenomenon that light traversing a transparent or translucent fluid medium containing particles whose refractive index differs from that of the medium results in the scattering of some of the light. This effect is known as Tyndall scattering. The fraction of the light scattered per unit of light path length depends on the surface area of the particles, the refractive indices of the medium and the particles (or, if the particles are opaque, on the reflectivity of the particle surface), and upon the relative sizes of the particles with respect to the wavelength of the illuminating light. At relatively low particle concentrations, the scattered light fraction is substantially linear with the concentration, assuming the other factors to be relatively constant. At relatively high concentrations, however, both the illuminating light and the scattered light are attenuated by secondary scattering, resulting in non-linearity of the collected scattered light with concentration.

A probe according to the invention employs one or more optical fibers for transmitting light from a source to a continuous phase reaction medium so as to illuminate a predetermined area or zone thereof. The probe also employs one or more optical fibers to collect light scattered by particles in the illuminated zone and transmit such collected light to a detector. The use of optical fibers enables the illuminating light source and the collected light detector to be located at safe distances from the medium being monitored.

Both sets of fibers, i.e., the illuminating light fibers and the scattered light collecting fibers, are enclosed in a single fluid tight probe housing having a transparent window at one end which confronts the medium to be examined. The material from which the housing is made is one which can withstand the heat and constituency of the medium so as to be capable of immersion in the medium itself and at any desired area and depth thereof. The optical fibers are so oriented to the longitudinal axis of the probe housing that the longitudinal axes of the illuminating light fibers intersect the longitudinal axes of the collected light fibers at a common point on the longitudinal axis of the housing. This arrangement provides an adequate zone of illumination and an adequate illuminated field of view.

The invention also resides in a method for determining the size and concentration of moving, light reflective particles in suspension in a fluid medium, said method comprising the steps of

(a) illuminating a zone of said fluid medium with light capable of being transmitted by said fluid medium and reflected by said particles;

(b) collecting reflected light;

(c) measuring the average intensity and variations in intensity of the collected light; and

(d) comparing the measured values of the average intensity and variations in intensity with corresponding values obtained by the application of steps (a), (b), and (c) to at least one other suspension of like medium containing like particles.

EP 0 184 269 B1

Probes constructed in accordance with the invention are illustrated in the accompanying drawings, wherein:

Figure 1 is a fragmentary sectional view of one embodiment and taken on the line 1—1 of Figure 2;

Figure 2 is an end elevation view of the embodiment of Figure 1;

Figure 3 is a view similar to Figure 1, but taken on the line 3—3 of Figure 4 and illustrating another embodiment;

Figure 4 is an end elevational view of the embodiment of Figure 3;

Figure 5 is a view similar to Figure 3, but illustrating a further embodiment; and

Figure 6 is a diagrammatic illustration of the manner in which a probe according to the invention may be used.

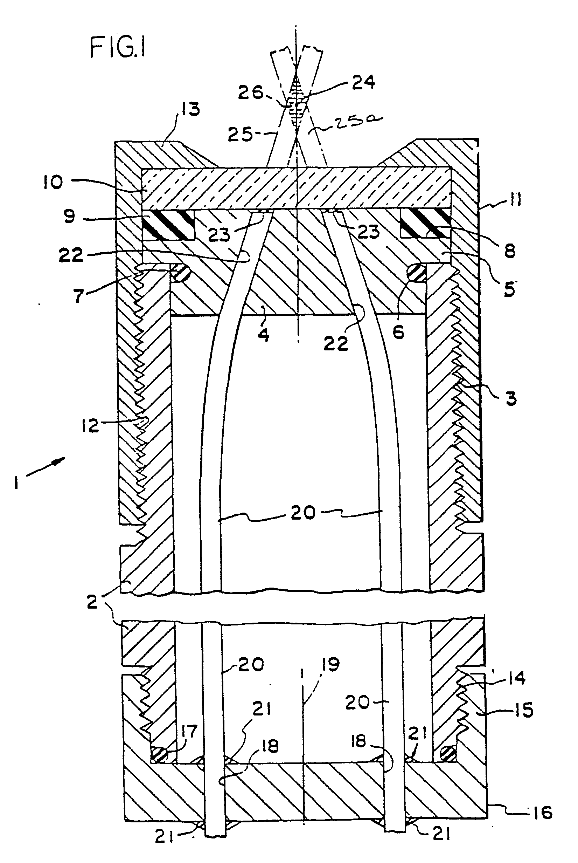

A probe constructed in accordance with the embodiment of Figure 1 is generally designated by reference number 1 and comprises a hollow, cylindrical, elongate housing 2 formed of a metal or some other suitable material capable of immersion in a fluid medium that is to be monitored. Hereinafter the fluid medium sometimes will be referred to as the sample. The housing 2 has external threads 3 at one end thereof. Fitted into the threaded end of the housing 2 is a support 4 having a flange 5 which is seated on the free end of the housing. Adjacent the flange is a groove 6 in which is accommodated a sealing ring 7 so as to provide a fluid tight joint between the support and the interior of the housing. The support 4 also is provided with an annular groove 8 on which is seated another seal 9.

Seated upon the support 4 and the annular seal 9 is a transparent window 10 of suitable thickness, such as 2 mm, and formed of a suitable material, such as glass, quartz, sapphire, and the like. The support 4 and the window 10 are maintained in an assembled relationship by means of a cap 11 having an internally threaded bore 12 in which the threaded end of the housing 2 is accommodated. The cap has a flange 13 which overlies and seats upon the marginal edge of the window 10.

The opposite end of the housing 2 is exteriorly threaded as at 14 for accommodation in a correspondingly threaded skirt 15 of a cap 16. A suitable seal 17 is interposed between the end of the housing 2 and the cap 16.

The cap 16 is provided with three axially extending openings 18 which are radially and circumferentially spaced at uniform distances about the longitudinal axis 19 of the housing 2. The circumferential spacing between each opening 18 is preferably 120° although it will be obvious that other spacings for the openings are practical.

Extending through each of the openings 18 is an optical fiber 20 of preferably uniform diameter. Suitable seals 21 provide a fluid tight connection between the cap 16 and the fibers 20. The fibers extend through the housing and have corresponding ends fixed in openings 22 formed in the support 4. The openings 22 also are preferably radially and circumferentially spaced uniformly about the axis 19 of the housing, but unlike the openings 18, the axes of the openings 22 converge in a direction toward the adjacent end of the housing. The angle of convergence may vary, as will be explained. The fibers 20 extend through the openings 22 and abut the inner surface of the window 10. Preferably, a thin coating 23 of an optical coupling gel or oil having a refractive index similar to that of the fibers and the window is interposed between the window and the confronting ends of the fibers to reduce reflection losses at the fiber/window interface.

At least one of the fibers 20 has its free end located in a position to receive light from a source and transmit such light through the window 10 to illuminate a zone of a fluid sample. The remaining fibers may be coupled to one or more light detectors as will be explained in more detail hereinafter. For the time being, however, it is sufficient to state that the longitudinal axes of all of the fibers 20 intersect one another and the longitudinal axis 19 of the probe 1 at a common point 24 which lies on the longitudinal axis of the probe beyond the outer surface of the window 10. The diameter of the illuminating fiber is such that a substantially cylindrical beam of light 25 passes through the window into the sample. The diameter of the collecting light fibers preferably corresponds to that of the illuminating fiber so that, when an imaginary cylinder along the extended axes of the light collecting fibers 25a intersect with the light beam 25, there is formed a field of view 26 having the configuration of two back-to-back cones. The significance of this will be explained hereinafter.

Figure 3 discloses a probe 1a which corresponds to the probe 1 except that the probe 1a has a window 10a having a convex outer surface 10b and the flange 13a at the free end of the cap 11 is configured to accommodate and seat upon the concave surface. The greatest thickness of the window 10a is at the longitudinal axis 19 of the probe and may be about 3 mm in thickness. Another difference between the probes 1 and 1a is that the support 4a of the latter has four openings 22a therein instead of three. The openings 22a are uniformly radially and circumferentially spaced about the longitudinal axis 19 of the probe 1a and the longitudinal axes of the fibers converge and intersect one another and the axis 19 at a common point 24a. The angle of convergence with respect to the axis 19 is about 20°. The intersection point 24a does not extend beyond the convex outer surface 10b of the window 10a, but instead coincides therewith.

Accommodated in each of the openings 22a is one of the optical fibers 20. Two diametrically opposed fibers are coupled to one or more light sources for transmitting light beams 25a through the window 10a into the sample, whereas the other two fibers are associated with one or more light detectors for transmitting thereto light scattered by particles in that zone of the sample adjacent the point 24a.

3

EP 0 184 269 B1

As is apparent from Figure 3, the resulting field of view 26a at the intersection of the fiber axes and the housing axis is substantially conical in configuration with the base of the cone coinciding with the convex outer surface of the window 10a.

The field of view 26a, therefore, is less than the field of view 26 produced in the embodiment of Figure 1.

It is not necessary to use a window having a convex external surface to obtain a conical field of view like that indicated at 26a.

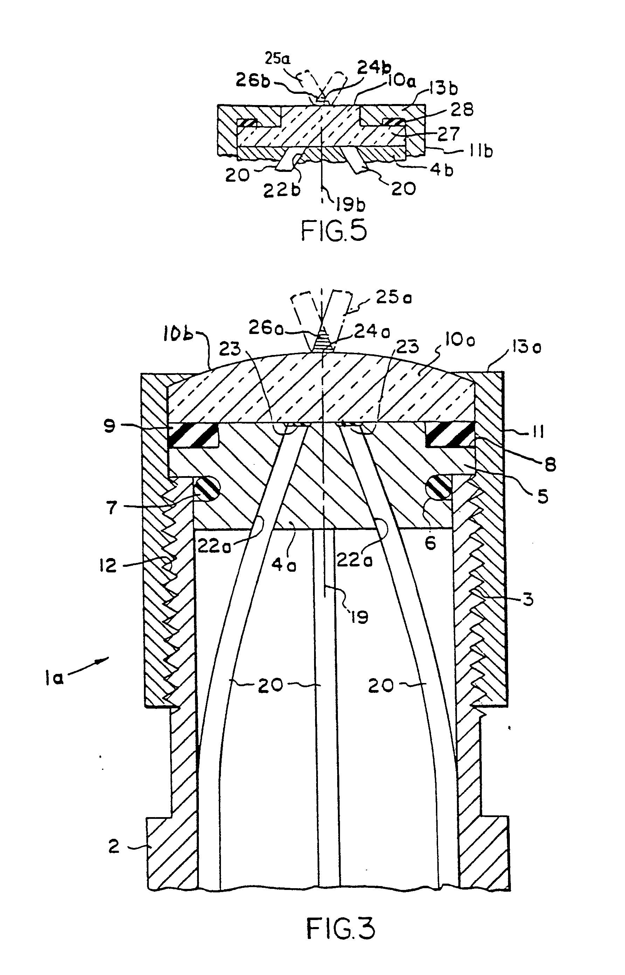

In the embodiment shown in Figure 5, the window 10a has a flat outer surface and a peripheral flange 27 which underlies a flange 13b at the free end of a cap 11b. Between the flanges 13b and 27 is an annular seal 28. A support 4b is similar to the supports 4 and 4a and underlies the inner surface of the window 10b and is provided with openings 22b for either three or four optical fibers 20 whose longitudinal axes converge and intersect one another and the longitudinal axis 19b at a common point 24b located at the outer surface of the window 10b, as a consequence of which the field of view 26b is conical and has its base at the outer surface of the window.

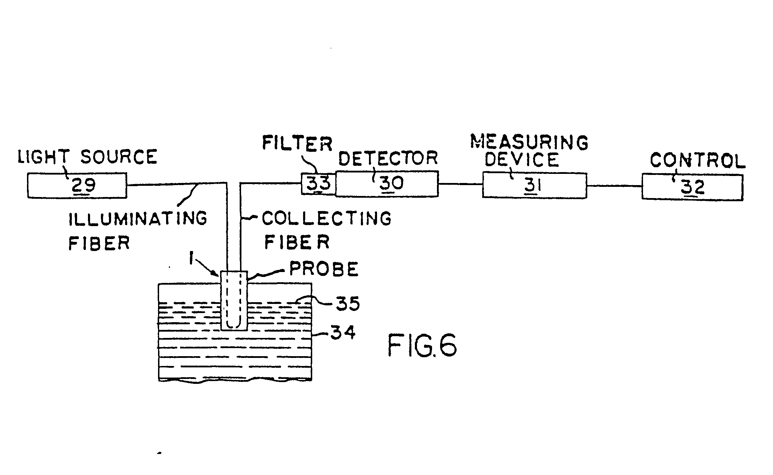

In the application of any of the disclosed probes for use, optical fibers which are to transmit light into the sample have those ends which are remote from the sample optically connected to a suitable light source 29 as shown in Figure 6. Such fiber or fibers hereinafter will be referred to as the illuminating fiber or fibers. The remote ends of the remaining fibers are connected to one or more suitable light detecting and intensity measuring devices 30 and 31, respectively. Such remaining fibers hereinafter will be referred to as the light collecting fibers. For convenience of illustration only one illuminating fiber and one light collecting fiber are shown in Figure 6.

A suitable source of light is a light emitting diode (LED), a laser diode, a continuous wave (CW) gas laser, an incandescent lamp, and a spectral lamp. Suitable detectors 30 include photodiodes and photomultipliers. A suitable intensity measuring device 31 is a photometer. The preferred detection and measuring devices comprise a photodiode and a transimpendance amplifier the output from which is coupled to a suitable control computer 32 or the like which is operable to control the process.

More particularly, a suitable source 29 of light is a Honeywell Model SPX 4689-04 GaAlAs light emitting doide (LED) which emits light at a wavelength of about 0.8 micron and this is suitable for use in suspensions of particles of about one micron or greater in diameter. The light source may be energized by a Hewlett-Packard Model 6181C DC power source. A suitable detector 30 is a Math Associates Model E-5100 silicon PIN photodiode. A suitable measuring device/amplifier 31 is a UDT model 101A amplifier manufactured by United Detector Technology. A suitable control/computer 32 is an Intel single board computer Model SBC-80/24. Each optical fiber may be a plastic clad silica fiber having a core diameter of 0.6 mm. A source of such fibers is Quartz Products Corporation.

If light other than that intentionally transmitted to the sample is present, an optical filter 33 can be interposed between the collecting fiber end and the detector 30 so as to exclude from the latter light having wavelengths other than those emitted by the light source.

If a high degree of ambient light exclusion is required, the light source 29 may be a monochromatic CW gas laser, a laser diode, or a spectral lamp, and the filter 33, 29 may be a narrow band pass filter or a monochromator.

In use, the probe 1 may be inserted via conventional tube fittings into a vessel 34 containing the sample 35 to be examined for the presence of particles or the probe may be immersed in the medium at any desired location within the latter.

Although the term "particles" is used herein, such term is intended to encompass all forms of materials present in discontinuous form in a reaction medium. Thus, the term "particles" is intended to apply to materials such as liquid droplets in a gas or in an immiscible liquid, gas bubbles in a liquid, or solid particulate in a gas or liquid.

The embodiment shown in Figure 1 is preferred for use in the monitoring of samples containing low concentrations of particles. This is because a sample containing a low concentration is less turbid than one having a greater concentration, as a consequence of which there is less obstruction to penetration of the sample by the illuminating light beam. Thus, the light beam 25 is capable of illuminating a relatively large volume of the sample as compared to the probe design 43 e.g. Figure 3 or 5.

The field of view 26 is determined by projecting the imaginary cylinder 25a of the light collecting fiber 20 beyond the outer surface of the window 10 so that it intersects the light beam 25. Any particles in the field of view 26 will reflect or scatter some of the light and some of the scattered light will be collected by the light collecting fiber and will be transmitted by the latter to the detector and intensity measuring devices.

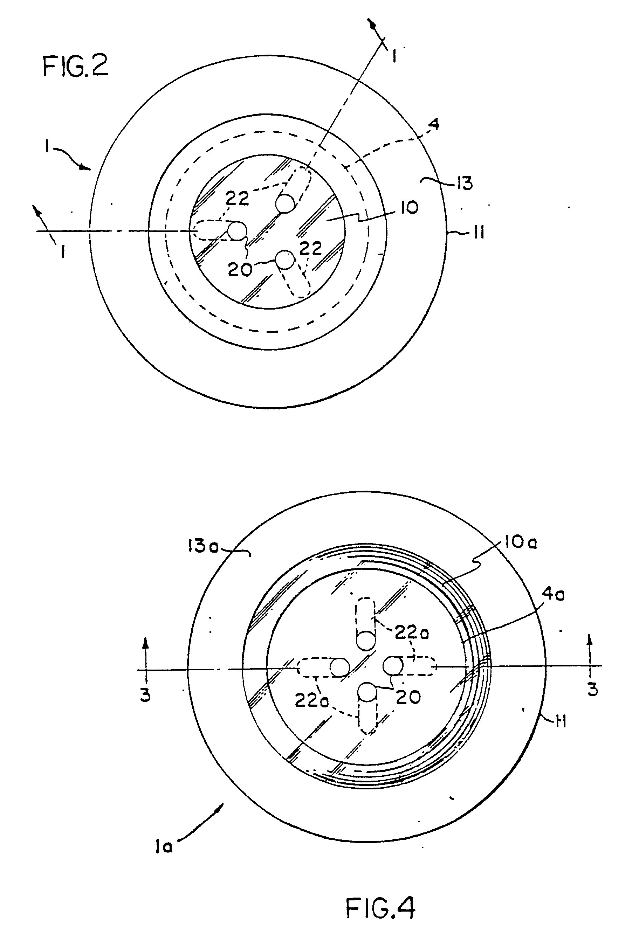

In those instances in which the concentration of particles in the sample is relatively high, the probe 1a of Figure 3 or 4 is preferred. In such case the light beams 25a emitted by the illuminating fibers have a relatively shallow penetration into the sample, but the field of view 26a commences at the exterior surface of the window, thereby enabling light scattered by particles in the field of view to be collected by the light collecting fibers.

The sensitivity of probes constructed according to the invention is dependent upon (1) the amount of light conducted to the field of view, (2) the efficiency with which the light scattered by the particles in the sample is collected and transmitted to the detector, and (3) the efficiency with which light other than that

4

scattered by the particles (extraneous light) is excluded.

For detection of very small concentrations of particles (in the parts per million to parts per billion range) exclusion of extraneous light is the most important consideration. A major source of extraneous light results from reflection of the illuminating light at the interface between the sample and the window. Typically $10^{-5}$ to $10^{-2}$ Watts (W) of light are used to illuminate the sample. The reflection at the window-sample interface is typically about 0.1 to 1 percent, or $10^{-4}$ to $10^{-8}$ W, and varies with the refractive index of the sample. The scattered light collected from very low concentrations of particles may be as low as $10^{-13}$ W. Accordingly it is necessary to exclude virtually all of the reflected light.

The geometry of the probes disclosed herein has been selected to yield maximum exclusion of reflected light consistent with otherwise acceptable performance. This is accomplished by choosing the angle between the longitudinal axes of the fibers and the longitudinal axis of the probe, the radial spacing of the fibers from the longitudinal axis of the probe, the circumferential spacing between the fibers, and the window thickness so that light reflected from the window does not fall on any of the collecting fiber ends. Typically, these factors are so selected that such reflected light falls either along the probe axis or on that side of the probe axis opposite the illuminating fiber and between adjacent collecting fibers. By positioning the illuminating fibers diametrically opposite one another, light reflected from one such fiber is least likely to fall on a light collecting fiber.

The amount of light collected and transmitted by the collecting fibers is approximately proportional to (1) their total cross-sectional area (i.e., the product of the number of collecting fibers and the cross-sectional area of each), (2) the inverse of the square of the distance between the ends of the fibers and the intersection of their axes, and (3) the angle between the illuminating fiber(s) and the collecting fiber(s). The optimum angle was found experimentally to be between about 20° to 25° for particles with diameters between 0.2 and 200 microns, but angles between about 10° and 30° yielded sensitivities within about 30 percent of the maximum.

A radial distance from the fiber to the longitudinal axis of the probe of two to three times the fiber diameter was found to yield satisfactory results for three and four fiber probes in which the angle between the longitudinal axes of the fibers and the longitudinal axis of the probe is between 10° and 25°. The choice of the circumferential spacing between the illuminating fibers and the collecting fibers also represents a compromise between sensitivity and extraneous light reflection, with relatively small spacing (less than 90°) yielding better extraneous light rejection, but poorer sensitivity than larger spacing (over 90°). In practice, a circumferential spacing of the fibers of from 60° to 120° performs well.

Assuming that the circumferential spacing between the fibers and the ratio between the fiber diameter and the distance to the longitudinal axis of the probe is constant, the sensitivity is approximately proportional to the fiber diameter. This results from the fact that both the cross-sectional area of the fibers and the square of the distance to the intersection are proportional to the square of the fiber diameter, while the depth of field (i.e., the length of the region in which the fields of view of the illuminating fibers and the collecting fibers overlap) increases with the fiber diameter. Plastic clad silica fibers having a core diameter of from 200 to 600 microns are most suitable. The larger diameters (about 600 microns) perform slightly better and are easiest to handle and are thus preferred. Fibers with larger core diameters are more expensive however and require probes of a larger diameter, due to their large bending radii, and are thus less desirable.

The diameter of the illuminating fibers may be identical to each other and to that of the collecting fibers. When used in conjunction with LEDs or extended light sources, such as incandescent lamps or spectral lamps, smaller fibers will generally transmit less light to the sample and larger fibers increase the extraneous light more than they increase the illumination of the region viewed by the collection fibers. When focussed beams from CW lasers or laser diodes are used for illumination, fibers with core diameters smaller than those of the collection fibers are preferred because their use results in less extraneous light due to the smaller diameter of the reflection from the window sample interface. Further, the depth of field of the probe is reduced, due to the smaller diameter of the illuminating light beam, which results in increased dynamic range. Illuminating fibers with core diameters of from 100 to 300 microns perform well in conjunction with laser light sources and 600 micron diameter collecting fibers.

The number of collecting fibers employed represents a compromise between sensitivity and expense. One collecting fiber is sufficient for most applications, but more are advantageous for applications requiring high sensitivity.

One illuminating fiber is sufficient to collect the light from a light emitting diode, laser, or laser diode, whereas two or more are advantageous for collecting light from extended sources.

Probes with more than the minimum number of fibers required for the measurement provide redundancy which is advantageous in case of fiber breakage.

The present invention also relates to a method for measuring either the size or concentration, or both simultaneously, of particles, immiscible liquid droplets, or gas bubbles suspended in a fluid medium employing the apparatus hereinbefore described. For convenience, the term "particle(s)" as used hereinafter in the description and claims means solid particulate material, gas bubbles, or liquid droplets. The measurements can be performed in-situ within closed reactors, pipes, or other process equipment. It thus is suitable for process control applications.

The method is applicable to suspensions which are stirred, agitated, or flowing, or in which the particles otherwise are set in motion as, for example, suspensions in which the particles are moving under the influence of gravity.

The method comprises illuminating a zone of a fluid medium containing moving, light reflective particles with light of a constant intensity and collecting and measuring a portion of the light reflected by the particles. The average intensity and the variance of the intensity of the collected reflected light are computed. The size and concentration of the particles are determined by comparison of the computed values with values resulting from identical measurements of a like medium containing like particles of known size and concentration.

Upon illumination of a zone of a transparent or translucent medium containing particles which are at least as large as the wavelength of the illuminating light, and which have a refractive index different from that of the medium, a fraction of the light is reflected. The fraction of the incident light reflected from an illuminated zone of fixed volume within the medium depends on the size and number of particles present in that zone and on the refractive indices of the particles and the medium. If the intensity of the illuminating light is not constant throughout the illuminated zone, or if the efficiency of collection of the reflected light is not constant throughout, the intensity of the detected light (i.e., the collected, reflected light) from a particle will depend on the position of the particle within the zone. If the particles are in motion, rather than stationary, the number and positions of particles in the illuminated zone will vary with time, thereby resulting in random fluctuations in the intensity of the detected light. The magnitude of these fluctuations will depend on the size and number of particles present.

In a case in which a dilute suspension of monosized particles is illuminated by light of constant intensity, the fraction of light reflected from each particle may be considered a constant. Thus, fluctuations in the intensity of the detected light will be due to the statistical variations in the number and positions of particles in the illuminated zone. In this instance, the average (mean) intensity of the detected light (X) and the variance (V) of the intensity of the detected light are given by:

$$X = A^* (C/D) \qquad\qquad \text{Equation 1}$$

$$V = B^* (CD) \qquad\qquad \text{Equation 2}$$

where D is the particle diameter, C is the particle concentration, and $A^*$ and $B^*$ are quantities whose values depend on the refractive index or reflectivity of the particles, the intensity of the illuminating light, the size of the illuminated zone, and the geometry of the illuminating and light collecting optics. $A^*$ and $B^*$ thus are constants for a particular combination of particle material, suspending medium, and optical system.

Equations 1 and 2 can be solved simultaneously for the concentration (C) and diameter (D) to yield:

$$C = A(XV)^{1/2} \qquad\qquad \text{Equation 3}$$

$$D = B\frac{V^{1/2}}{X} \qquad\qquad \text{Equation 4}$$

where A and B are constants which are related to $A^*$ and $B^*$ by the equations:

$$A = \frac{1^{1/2}}{A^* B^*} \qquad\qquad \text{Equation 5}$$

$$B = \frac{A^{*1/2}}{B^*} \qquad\qquad \text{Equation 6}$$

If a suspension of particles of known size and concentrations is obtained, the size and concentration of like particles of unknown size and concentration suspended in a like medium can be determined by measuring the mean and variance of the intensity of light reflected by the known and unknown suspensions, respectively, using the same measuring apparatus for both suspensions, and applying Equation 3 and Equation 4.

Because Equation 3 is independent of the particle size and Equation 4 is independent of concentration, it is possible to determine either the size or the concentration independently.

The determination of particle size in a medium does not necessarily require that the average concentration of the particles in the illuminated zone be the same as that of the entire medium. It is only necessary that the particles in that zone be representative. Thus, the invention is applicable to particle size determination in processes in which the particle concentration is not constant throughout the medium.

If stable samples of known particle size and concentration are not available, as always is the case for gas bubbles, and often for liquid droplets, the calibration must be performed external to the process equipment. This sometimes can be accomplished by making light reflection measurements simultaneously with other measurements, such as photography-image analysis, which yields measures of the concentration and particle size.

If a suspension of known particle size and concentration is not available, the relative sizes and concentrations of the particles in two suspensions of the same material in the same medium still can be determined. If $X_i$ and $V_i$ represent the average intensity and variance, respectively, of the detected light from one sample, and $C_i$ and $D_i$ represent the concentration and average particle size of the particles in that suspension, and if $X_j$, $V_j$, $C_j$, and $D_j$ represent the same variables in a second suspension of the same material in the same medium, then:

$$\frac{C_i}{C_j} = \frac{X_i V_i^{1/2}}{X_j V_j} \qquad \text{Equation 7}$$

$$\frac{D_i}{D_j} = \frac{X_j V_i^{1/2}}{X_i V_j} \qquad \text{Equation 8}$$

The direction, i.e., smaller or larger, and the relative magnitude of changes in the concentration and of the average size of particles, in a single suspension, also can be determined by repeatedly measuring the average intensity and variance of the collected light and applying Equations 7 and 8.

In some instances not all of the conditions stated above will be met. For example, in some industrial processes the size or concentration of the particles may not fall within the range for which Equation 1 and Equation 2 are valid. In these cases the relationships among the size, concentration, mean, and variance are complex and exact expressions relating the variables cannot easily be derived. In such cases multiple known suspensions, having particle sizes and concentrations throughout the ranges of interest, may be employed to determine empirical relationships which will have the general form of nonlinear simultaneous equations. If the average intensity and variance of the detected light are monotonic functions of the average particle size and concentration throughout the range of interest, unique values for the concentration and average particle size of an unknown suspension can be obtained by inserting the measured values of the average intensity and the variance of the detected light from the unknown samples into the empirical equation thus obtained.

The concentrations and average diameters of samples of polystyrene beads were determined by the following procedure:

I. Calibration samples

A plurality of samples of polystyrene beads of known size were suspended in an aqueous sodium chloride solution. Three different samples of beads, having average diameters of 0.222 mm, 0.458 mm, and 0.621 mm, respectively, were suspended in the solution at concentrations of between 1.5 percent and 15 percent by volume. The beads were set in motion by agitation of the suspensions. Using the apparatus described above, the intensity of the reflected light was measured ten thousand times at three millisecond intervals for each suspension and the average (mean) and variance of these measurements computed. This was done three times for each of the suspensions. Average values for the mean and variance of each suspension were then used to compute, by the method of least squares, the constants for the regression equations:

$$C = K_1 (XV)^{1/2} + K_2 \qquad \text{Equation 9}$$

$$D = K_3 \frac{V^{1/2}}{X} + K_4 \qquad \text{Equation 10}$$

II. Unknown samples

Twenty-seven suspensions then were prepared like the calibration samples, except that the diameters of the beads were not known. The values of the mean and variance of the intensity of the detected light from each suspension were determined in a manner identical to that used in the calibration procedure. Measured values for the concentrations and average diameters then were obtained by inserting the detected mean and variance values into the linear regression Equations 9 and 10. The true average diameters of the three samples were then determined by microphotography. The measured and true values for the particle diameter and concentration of each unknown suspension are set forth in the following Table.

# EP 0 184 269 B1

TABLE
(Results from Illustrative Example)

| Sample | Diameter (microns) | | Rel. error % | Concentration (vol. %) | | Rel. error % |
|---|---|---|---|---|---|---|
| | Meas. | True | | Meas. | True | |
| 1 | 324 | 301 | 7.6 | 2.24 | 2.30 | 2.6 |
| 2 | 318 | 301 | 5.6 | 3.19 | 3.03 | 5.3 |
| 3 | 310 | 301 | 3.0 | 4.44 | 4.12 | 7.8 |
| 4 | 302 | 301 | 0.3 | 5.32 | 5.00 | 6.4 |
| 5 | 318 | 301 | 5.6 | 6.44 | 5.73 | 12.4 |
| 6 | 324 | 301 | 7.6 | 7.56 | 6.60 | 14.5 |
| 7 | 315 | 301 | 4.7 | 8.14 | 7.42 | 9.7 |
| 8 | 324 | 301 | 7.6 | 9.20 | 8.19 | 12.3 |
| 9 | 323 | 301 | 7.3 | 10.44 | 9.11 | 14.6 |
| 10 | 360 | 374 | 3.7 | 2.19 | 2.74 | 20.0 |
| 11 | 407 | 374 | 8.8 | 3.87 | 3.89 | 0.5 |
| 12 | 396 | 374 | 5.9 | 4.94 | 4.94 | 0.0 |
| 13 | 399 | 374 | 6.7 | 6.33 | 6.17 | 2.6 |
| 14 | 404 | 374 | 8.0 | 7.63 | 7.41 | 3.0 |
| 15 | 383 | 374 | 2.4 | 8.59 | 8.82 | 2.6 |
| 16 | 389 | 374 | 4.0 | 9.81 | 9.23 | 6.3 |
| 17 | 395 | 374 | 5.6 | 11.29 | 11.44 | 1.3 |
| 18 | 398 | 374 | 6.4 | 12.56 | 12.89 | 2.6 |
| 19 | 450 | 447 | 0.7 | 2.85 | 3.35 | 14.9 |
| 20 | 459 | 447 | 2.7 | 4.19 | 4.50 | 6.9 |
| 21 | 436 | 447 | 2.5 | 5.33 | 5.19 | 9.8 |
| 22 | 430 | 447 | 3.8 | 6.43 | 7.15 | 10.1 |
| 23 | 450 | 447 | 0.7 | 7.66 | 8.19 | 6.5 |
| 24 | 439 | 447 | 1.8 | 8.59 | 9.51 | 9.7 |
| 25 | 448 | 447 | 0.2 | 7.86 | 10.74 | 8.2 |
| 26 | 444 | 447 | 0.7 | 10.75 | 11.96 | 10.1 |
| 27 | 456 | 447 | 2.0 | 12.06 | 13.22 | 8.8 |

The disclosed embodiments are representative of presently preferred embodiments of the invention, but are intended to be illustrative rather than definitive thereof.

8

## Claims

1. A fiber optic probe (1) comprising a housing (2) having a longitudinal axis; a transparent window (10) closing a first end of said housing (2), said window (10) having inner and outer surfaces; and at least two elongate optical fibers (20) entering the opposite end of said housing (2) and extending through the housing (2), characterized by the fact that said fibers (20) have their terminal ends confronting and terminating at said inner surface of said window (10) at said first end of said housing, said terminal ends of all of said fibers (10) being radially spaced from the longitudinal axis (19) of said housing (2) and circumferentially spaced from one another, said fibers (20) having imaginary cylinders extending along their longitudinal axies and said imaginary cylinders converging toward one another in a direction toward an outer surface of said window (10) and intersecting one another at a common point of intersection (24) and within a field of view centered on the longitudinal axis of said housing (2).

2. The probe of Claim 1, wherein said common point of intersection (24) is substantially at the outer surface of said window (10).

3. The probe of Claim 1, wherein said common point of intersection (24) is spaced beyond the outer surface of said window (10).

4. The probe of Claim 1, 2 or 3, wherein said window (10) has flat inner and outer surfaces.

5. The probe of Claim 1, 2 or 3, wherein said window has a flat inner surface and a convex outer surface.

6. The probe according to Claim 1, wherein the radial spacing from the longitudinal axis (19) of the housing (2) to the longitudinal axis of each of said fibers (20) is substantially uniform.

7. The probe according to Claim 1 or 6, wherein the circumferential spacing between the longitudinal axes of the fibers (20) is substantially uniform.

8. The probe of Claim 1, including an optical coupling fluid interposed between said window (10) and the confronting ends of said fibers (20).

9. The probe of Claim 1, wherein said common point of intersection (24) is spaced from the outer surface of said window (10) a distance sufficient that imaginary cylindrical extensions of said fibers intersect one another and form externally of said window a pair of back-to-back conical zones or portions thereof lying along the longitudinal axis (19) of the housing (2) and on opposite sides of said common point of intersection (24).

10. The probe of Claim 1, wherein said common point of intersection (24) is so located with reference to the other surface of said window (10) that imaginary cylindricl extensions of said fibers intersect one another and form externally of said window (10) a single conical zone extending along the longitudinal axis (19) of said housing (2).

11. The probe of Claim 1, wherein said window (10) is formed from a material selected from glass, quartz, and sapphire.

12. The probe of Claim 1, including a support means for positioning said fibers (20) with their longitudinal axes uniformly spaced radially from the longitudinal axis (19) of said housing (2), a source of light (29) coupled to at least one of said fibers (20) for transmission thereby through said window to illuminate a zone that includes the field of view, and means (30) for detecting light transmitted by said remaining fibers (20).

13. The probe of Claim 2, wherein the circumferential spacing between adjacent fibers is such that no reflection of light from an interface between the probe and a sample falls on said light collecting fiber.

14. The probe of Claim 12 or 13, wherein said source of light (29) is coupled to a plurality of said fibers, each of said fibers being diametrically opposed to another of such fibers.

15. The probe of Claim 1, wherein at least one fiber is used as an illuminating fiber, and at least one fiber is used as a light collecting fiber.

16. A method for determining the size, the concentration, or both size and concentration of moving, light reflective particles in suspension in a fluid medium, said method comprising the steps of:
   a. illuminating a zone of said fluid medium with light capable of being transmitted by said fluid medium and reflected by said particles;
   b. collecting reflected light;
   c. measuring the average intensity and variations in intensity of the collected light; and
   d. comparing the measured value of the average intensity and variations in intensity with corresponding values obtained by the application of steps a, b and c to at least one other suspension composed of like particles in a like medium.

17. A method according to Claim 18, wherein the size, concentration, or both size and concentration of said like particles is known.

18. The method of Claim 16 or 17, wherein said particles are solid particles, gas bubbles, or immiscible liquid droplets.

## Patentansprüche

1. Faseroptische Sonde (1), umfassend ein Gehäuse (2) mit einer Längsachse, einem durchsichtigen Fenster (10), welches ein erstes Ende des Gehäuses (2) schließt, wobei das Fenster (10) Innen- und Außenflächen besitzt, und mindestens zwei gestreckte optische Fasern (20), die in das entgegengesetzte Ende des Gehäuses (2) führen und sich durch das Gehäuse (2) erstrecken, dadurch gekennzeichnet, daß die terminalen Enden der Fasern (20) der Innenfläche des Fensters (10) am ersten Ende des Gehäuses gegenüberliegen und dort enden, wobei die terminalen Enden aller Fasern (10) in radialem Abstand von der Längsachse (19) des Gehäuses (2) angeordnet sind und in einem Umfangsabstand voneinander angeordnet sind, wobei die Fasern (20) imaginäre Zylinder besitzen, die sich entlang ihrer Längsachsen erstrecken, und wobei die imaginären Zylinder in Richtung zu einer Außenfläche des Fensters (10) hin konvergieren und einander an einem gemeinsamen Schnittpunkt (24) und innerhalb eines Sichtfelds, das auf die Längsachse des Gehäuses (2) zentriert ist, schneiden.

2. Sonde nach Anspruch 1, worin der gemeinsame Schnittpunkt (24) etwa an der Außenfläche des Fensters (10) ist.

3. Sonde nach Anspruch 1, worin der gemeinsame Schnittpunkt (24) hinter der Außenfläche des Fensters (10) angeordnet ist.

4. Sonde nach Anspruch 1, 2 oder 3, worin das Fenster (10) flache Innen- und Außenflächen besitzt.

5. Sonde nach Anspruch 1, 2 oder 3, worin das Fenster eine flache Innenfläche und eine konvexe Außenfläche besitzt.

6. Sonde nach Anspruch 1, worin der radiale Abstand von der Längsachse (19) des Gehäuses (2) zur Längsachse von jeder der Fasern (20) im wesentlichen gleichförmig ist.

7. Sonde nach Anspruch 1 oder 6, worin der Umfangsabstand zwischen den Längsachsen der Fasern (20) im wesentlichen gleichförmig ist.

8. Sonde nach Anspruch 1, beinhaltend eine optische Verbindungsflüssigkeit, die sich zwischen dem Fenster (10) und den gegenüberliegenden Enden der Fasern (20) befindet.

9. Sonde nach Anspruch 1, worin der gemeinsame Schnittpunkt (24) sich in einer ausreichenden Entfernung von der Außenfläche des Fensters (10) befindet, daß die imaginären zylindrischen Verlängerungen der Fasern einander schneiden und außerhalb des Fensters ein Paar von kegelförmigen Rücken-an-Rücken liegenden Bereichen oder Teile davon bilden, die entlang der Längsachse (19) des Gehäuses (2) und auf entgegengesetzten Seiten des gemeinsamen Schnittpunkts (24) liegen.

10. Sonde nach Anspruch 1, worin der gemeinsame Schnittpunkt (24) im Hinblick auf die andere Fläche des Fensters (10) so gelegen ist, daß imaginäre zylindrische Verlängerungen der Fasern einander schneiden und außerhalb des Fensters (10) einen einzigen kegelförmigen Bereich bilden, der sich entlang der Längsachse (19) des Gehäuses (2) erstreckt.

11. Sonde nach Anspruch 1, worin das Fenster (10) aus einem Material, ausgewählt aus Glas, Quarz und Saphir gebildet ist.

12. Sonde nach Anspruch 1, beinhaltend ein Trägermittel zum Positionieren der Fasern (20), so daß ihre Längsachsen in einem gleichförmigen radialen Abstand zur Längsachse (19) des Gehäuses angeordnet sind, eine Lichtquelle (29), die mit mindestens einer der Fasern (20) zur Übermittlung durch das Fenster verbunden ist, um einen Bereich zu beleuchten, der das Sichtfeld einschließt, und Mittel (30) zum Nachweis von Licht, das durch die verbleibenden Fasern (20) übermittelt wird.

13. Sonde nach Anspruch 2, worin der Umfangsabstand zwischen benachbarten Fasern so ist, daß keine Lichtreflexion von einer Schnittstelle zwischen der Sonde und einer Probe auf die Lichtsammlungsfaser fällt.

14. Sonde nach Anspruch 12 oder 13, worin die Lichtquelle (29) mit mehreren Fasern verbundn ist, wobei jede der Fasern diametral einer anderen dieser Fasern gegenüberliegt.

15. Sonde nach Anspruch 1, worin mindestens eine Faser als Beleuchtungsfaser verwendet wird und mindestens eine Faser als Lichtsammlungsfaser verwendet wird.

16. Verfahren zur Bestimmung der Größe, der Konzentration oder sowohl der Größe und Konzentration von sich bewegenden, Licht reflektierenden Teilchen, die in einem fluiden Medium suspendiert sind, wobei das Verfahren folgende Schritte umfaßt:

a) Beleuchten eines Bereichs des fluiden Mediums mit Licht, das durch das fluide Medium übermittelt und von den Teilchen reflektiert werden kann,

b) Sammeln von reflektiertem Licht,

c) Messen der mittleren Intensität und der Variationen der Intensität des gesammelten Lichts und

d) Vergleichen des Meßwerts der mittleren Intensität und der Variationen der Intensität mit korrespondierenden Werten, die durch Anwendung der Schritte a), b) und c) auf mindestens eine andere Suspension erhalten wurde, die aus ähnlichen Teilchen in einem ähnlichen Medium zusammengesetzt ist.

17. Verfahren nach Anspruch 16, worin die Größe, die Konzentration oder sowohl Größe und Konzentration der ähnlichen Teilchen bekannt ist.

18. Verfahren nach Anspruch 16 oder 17, worin die Teilchen feste Teilchen, Gasblasen oder unmischbare Flüssigkeitströpfchen sind.

**Revendications**

1. Sonde (1) à fibres optiques, comprenant un boîtier (2) présentant un axe longitudinal, une fenêtre transparente (10) fermant une première extrémité de ce boîtier (2), cette fenêtre (10) possédant des surfaces intérieure et extérieure, et au moins deux fibres optiques (20) d'assez grande longueur, pénétrant par l'extrémité opposée du boîtier (2) et traversant ce dernier, caractérisée en ce que les fibres (20) ont leurs extrémités qui font face à la surface intérieure de la fenêtre (10) se trouvant à la première extrémité du boîtier et se terminent à l'endroit de cette surface intérieure, ces mêmes extrémités de toutes les fibres (10) étant espacées radialement de l'axe longitudinal (19) du boîtier (2) et espacées entre elles dans le sens circonférentiel, tandis que les fibres (20) ont des cylindres imaginaires se prolongeant le long de leurs axes longitudinaux, les cylindres imaginaires convergeant entre eux en direction d'une surface extérieure de la fenêtre (10) et se recoupant entre eux en un point commun d'intersection (24) et suivant un champ observé centré sur l'axe longitudinal du boîtier (2).

2. Sonde selon la revendication 1, dans laquelle le point commun d'intersection (24) est situé pratiquement à l'endroit de la surface extérieure de la fenêtre (10).

3. Sonde selon la revendication 1, dans laquelle le point commun d'intersection (24) est situé à une certaine distance au-delà de la surface extérieure de la fenêtre (10).

4. Sonde selon l'une des revendications 1 à 3, dans laquelle la fenêtre (10) présente des surfaces intérieure et extérieure qui sont planes.

5. Sonde selon l'une des revendications 1 à 3, dans laquelle la fenêtre présente une surface intérieure plane et une surface extérieure convexe.

6. Sonde selon la revendication 1, dans laquelle l'espacement radial existant entre l'axe longitudinal (19) du boîtier (2) et l'axe longitudinal de chacune des fibres (20) est pratiquement uniforme.

7. Sonde selon l'une des revendications 1 ou 6, dans laquelle l'espacement circonférentiel existant entre les axes longitudinaux des fibres (20) est pratiquement uniforme.

8. Sonde selon la revendication 1, comprenant un fluide de couplage optique interposé entre la fenêtre (10) et les extrémités des fibres (20) qui lui font face.

9. Sonde selon la revendication 1, dans laquelle le point commun d'intersection (24) est situé à une distance de la surface extérieure de la fenêtre (10) qui est suffisante pour que les prolongements cylindriques imaginaires des fibres se recoupent entre eux et forment, à l'extérieur de la fenêtre, une paire de zones coniques disposées base contre base, ou une paire de parties de telles zones, qui sont situées le long de l'axe longitudinal (19) du boîtier (2) et de part et d'autre du point commun d'intersection (24).

10. Sonde selon la revendication 1, dans laquelle le point commun d'intersection (24) est disposé par rapport à la surface extérieure de la fenêtre (10) de façon telle que les prolongements cylindriques imaginaires des fibres se recoupent entre eux et forment, à l'extérieur de la fenêtre (10), une zone conique unique s'étendant le long de l'axe longitudinal (19) du boîtier (2).

11. Sonde selon la revendication 1, dans laquelle la fenêtre (10) est en une matière choisie parmi le verre, le quartz et le saphir.

12. Sonde selon la revendication 1, comprenant des moyens de support servant à positionner les fibres (20) avec leurs axes longitudinaux espacés radialement de l'axe longitudinal (19) du boîtier (2) d'une manière uniforme, une source de lumière (29) couplée à au moins l'une des fibres (20), afin de permettre une transmission par celle-ci à travers la fenêtre en vue d'éclairer une zone qui comprend le champ observé, et des moyens (30) permettant de détecter la lumière transmise par les autres fibres (20).

13. Sonde selon la revendication 2, dans laquelle l'espacement circonférentiel entre des fibres voisines est tel qu'aucune réflexion de lumière provenant d'une interface existant entre la sonde et un échantillon ne tombe sur la fibre collectrice de lumière.

14. Sonde selon l'une des revendications 12 ou 13, dans laquelle la source de lumière (29) est couplée à plusieurs des fibres, chacune de ces fibres étant disposée d'une manière diamétralement opposée par rapport à une autre de ces fibres.

15. Sonde selon la revendication 1, dans laquelle au moins une fibre est utilisée en tant que fibre d'éclairage et au moins une fibre est utilisée en tant que fibre collectrice de lumière.

16. Procédé pour déterminer la taille, la concentration ou à la fois la taille et la concentration de particules mobiles réfléchissant la lumière et en suspension dans un milieu fluide, ce procédé comprenant les étapes consistant:

a) à éclairer une zone du milieu fluide à l'aide d'une lumière susceptible d'être transmise par ce milieu fluide et réfléchie par les particules,

b) à recueillir la lumière réfléchie,

c) à mesurer l'intensité moyenne et les variations d'intensité de la lumière recueillie, et

d) à comparer les valeurs mesurées de l'intensité moyenne et des variations d'intensité à des valeurs correspondantes obtenues en appliquant les opérations a), b) et c) à au moins une autre suspension constituée de particules analogues dans un milieu fluide analogue.

17. Procédé suivant la revendication 16, dans lequel on connaît soit la taille, soit la concentration, soit encore à la fois la taille et la concentration, desdites particules analogues.

18. Procédé suivant l'une des revendications 16 ou 17, dans lequel les particles sont des particules de matière solide, des bulles de gaz ou des gouttelettes de liquide non-miscible.

FIG.1

FIG.2

FIG.4

EP 0 184 269 B1

FIG.5

FIG.3

3

FIG.6